# EUROPÄISCHE PATENTSCHRIFT

(11) **EP 0 691 013 B1**
(45) Veröffentlichungstag und Bekanntmachung des Hinweises auf die Patenterteilung: **23.07.1997**
(21) Anmeldenummer: 94910331.1
(22) Anmeldetag: 10.03.1994
(51) Int. Cl.: G07B 15/00, G01C 21/20, G01S 5/14

(54) **NUTZUNGSABRECHNUNGSSYSTEM**
USE BILLING SYSTEM
SYSTEME DE CALCUL DE L'UTILISATION

(30) Priorität: 23.03.1993 DE 4310099
(43) Veröffentlichungstag der Anmeldung: 10.01.1996
(60) Teilanmeldung: 96116068.6
(73) Patentinhaber: MANNESMANN Aktiengesellschaft, 40213 Düsseldorf (DE)
(72) Erfinder: WIDL, Andreas, D-82166 Gräfelfing-Lochham (DE)
(74) Vertreter: Meissner, Peter E., Dipl.-Ing.
(86) Internationale Anmeldenummer: DE9400276
(87) Internationale Veröffentlichungsnummer: WO9422112

(56) Entgegenhaltungen:
- EP-A- 0 425 961
- EP-A- 0 508 405
- EP-A- 0 519 630
- DE-A- 3 537 730
- DE-A- 3 908 702
- GB-A- 2 248 957
- VEHICLE NAVIGATION & INFORMATION SYSTEMS CONFERENCE PROCEEDINGS, 1. Oktober 1991, WARRENDALE, USA Seiten 977 - 987, XP000357202 KOMANECKY 'IVHS applications of smart cards'
- IEEE PLANS '92 POSITION LOCATION AND NAVIGATION SYMPOSIUM, 1. Januar 1992 Seiten 528 - 533, XP000344347 KIRSON 'ATIS - a modular approach'
- VEHICLE ELECTRONICS IN THE 90'S: PROCEEDINGS OF THE INTERNATIONAL CONGRESS ON TRANSPORTATION ELECTRONICS, Oktober 1990, WARRENDALE, USA Seiten 209 - 215 SUCHOWERSKYJ 'vehicle navigation and information systems in Europe - an overview'

## Beschreibung

Die Erfindung betrifft ein Nutzungsabrechnungssystem mit einer Einrichtung zur Identifizierung von Wegstrecken, die von einem bewegten Objekt (z.B. PKW, Motorrad, LKW, Bus, Schiff, Eisenbahnzug, Flugzeug, Person, Stückgut) innerhalb eines Wegstreckennetzes (z.B. Autobahnnetz, Wasserstraßennetz, Eisenbahnnetz) zurückgelegt werden, oder von geographischen Zonen (z.B. Innenstadtbereich, Luftraumzonen, Naturparkzonen), die vom Objekt betreten werden.

Aus der EP-A-0 519 630 ist ein Positionserfassungssystem für ein Kraftfahrzeug bekannt, das über das GPS-System die Positionsdaten ermittelt und über eine Anzeige erkennbar macht. Dieses GPS-System wird ebenfalls ausgenutzt für ein weiteres Positionserfassungssystem, wie es in der EP-A-0 519 630 beschrieben ist. Die Datenaufzeichnung kann auf einer Memory Card oder einem PC erfolgen.

Schließlich sei noch auf die DE-A-35 37 730 hingewiesen, die eine Einrichtung zum selbsttätigen Ansteuern eines Zielpunktes offenbart. Hierbei wird eine Funkortung über einen Sender mit bekanntem Standort vorgenommen und hieraus der aktuelle Kurs des bewegten Objektes ermittelt.

EP-A-0 519 630 offenbart eine Einrichtung mit den Merkmalen a) -e) des Anspruches 1.

EP-A-0 508 405 offenbart eine Einrichtung mit den Merkmalen a) - c) und g) des Anspruches 1.

EP-A-0 616.301, die zum Stand der Technik nach Art. 54(3) EPÜ gehört, offenbart ein System mit den Merkmalen a) - g) des Anspruchs 1. In der älteren Anmeldung sind die Vertragsstaaten ES, FR, GB und IT benannt. Sie genießt die Priorität 7.02.93 DE 4304838.

Zur Abrechnung von Gebühren für die Nutzung von Brücken oder Tunneln sind grenzstationsähnliche Abrechnungsstationen üblich, an denen durch Personal oder Münzzahlungsautomaten die jeweilige Gebühr erhoben wird. Zur Gebührenabrechnung von Autobahnabschnitten wird in Frankreich und Italien ein System benutzt, bei dem an der Einfahrstelle der Autobahn und an der Übergangsstelle von einem gebührenfreien zu einem gebührenpflichtigen Autobahnabschnitt jeweils vom Fahrzeugführer ein Ticket gezogen wird, auf dem die Einfahrstelle maschinell lesbar vermerkt ist. An der Ausfahrstelle oder an der Übergangsstelle von einem gebührenpflichtigen zu einem gebührenfreien Autobahnabschnitt kann dann anhand dieses Tickets die benutzte Gesamtstrecke ermittelt und die jeweilige Benutzungsgebühr berechnet und kassiert werden. Dieses System gestattet zwar eine sichere Abrechnung, setzt aber den Einsatz nicht nur erheblicher Investitionsmittel zur Schaffung der erforderlichen Infrastruktur, insbesondere für den Bau von Abrechnungsstationen mit Ticketautomaten, Schranken und Lichtanlagen usw. voraus, sondern erfordert auch einen erheblichen Personalaufwand für den Tag- und Nachtbetrieb der Abrechnungsstationen. Hinzu kommt der große Nachteil, daß der Verkehrsfluß insbesondere zu Verkehrsspitzenzeiten durch die Abrechnungstätigkeiten stark beeinträchtigt wird.

Um diesen Aufwand nicht treiben zu müssen, wird in der Schweiz seit mehreren Jahren ein anderes System zur Eintreibung von Autobahnbenutzungsgebühren angewendet, das auf der Basis einer pauschalen Bezahlung für einen festgelegten Zeitraum arbeitet. Gegen Entrichtung der Pauschalgebühr erhält der Fahrzeugführer eine Vignette, die sichtbar im Fahrzeug anzubringen ist und die Berechtigung zum Befahren der Autobahn nach außen erkennbar und somit kontrollierbar dokumentiert. Dieses System erfordert keine wesentlichen Infrastrukturaufwendungen, da auf ohnehin vorhandene Einrichtungen beim Verkauf der Vignetten (z.B. Postämter, Grenzstationen) und der Kontrolle (z.B. Autobahngrenzübergänge, Polizeistreifen) zurückgegriffen werden kann. Damit ist aber keine Abrechnung möglich, die dem tatsächlichen Umfang der Benutzung entspricht, so daß das Verursacherprinzip bei der Kostenzurechnung nur unzureichend berücksichtigt wird.

Es sind auch bereits Systeme vorgeschlagen worden, die eine individuelle Abrechnung nach dem tatsächlichen Nutzungsumfang gestatten. Sie setzen aber die Schaffung einer geeigneten lokalen Infrastruktur voraus, da sie beispielsweise auf Infrarot-Systemen oder sogenannten HF- oder RF-Transpondersystemen basieren, also auf speziellen maschinellen Einrichtungen zur Erkennung und Identifizierung einzelner Fahrzeuge auf den jeweiligen gebührenpflichtigen Wegstrecken oder entsprechenden festgelegten geographischen Zonen wie etwa eines Innenstadtbereichs, in dem der Autoverkehr gedrosselt werden soll. Die Transpondertechnik ist aus dem Bereich des militärischen Flugverkehrs seit Jahren bekannt, um bei fliegenden Objekten feindliche von freundlichen unterscheiden zu können. Das Prinzip dabei ist, daß ein zu identifizierendes Objekt von einer Kontrollstelle tz.B. eine Bodenstation, ein Schiff oder ein Flugzeug) "angefunkt" wird (z.B. mittels Radar) und dann automatisch ein geeignetes Erkennungssignal an die jeweilige Kontrollstelle sendet. Ubertragen auf z.B. ein Autobahngebührenabrechnungssystem bedeutet dies, daß entlang des gebührenpflichtigen Autobahnstreckennetzes an bestimmten Stellen (insbesondere Ein- und Ausfahrten) entsprechende maschinelle Kontrollstellen geschaffen werden müssen, um eine lückenlose Erfassung der zur Nutzungsabrechnung notwendigen Daten zu ermöglichen. Somit erfordert ein derartiges System einen erheblichen Aufwand für die Einrichtung einer flächendeckenden speziellen Infrastruktur.

Aufgabe der Erfindung ist es, eine Einrichtung der eingangs geschilderten Art vorzuschlagen, die nicht nur zur Abrechnung von Autobahngebühren, sondern auch für die Erfassung anderer Nutzungen definierter Gebiete (Strecken, Flächen, Räume) durch bewegte Objekte geeignet ist und vergleichsweise weniger infrastruktureller Aufwand erfordert.

Gelöst wird diese Aufgabe erfindungsgemäß mit den Merkmalen des Patentanspruchs 1. Vorteilhafte Weiterbildungen der Erfindung sind in den Unteransprüchen 2 bis 23 angegeben.

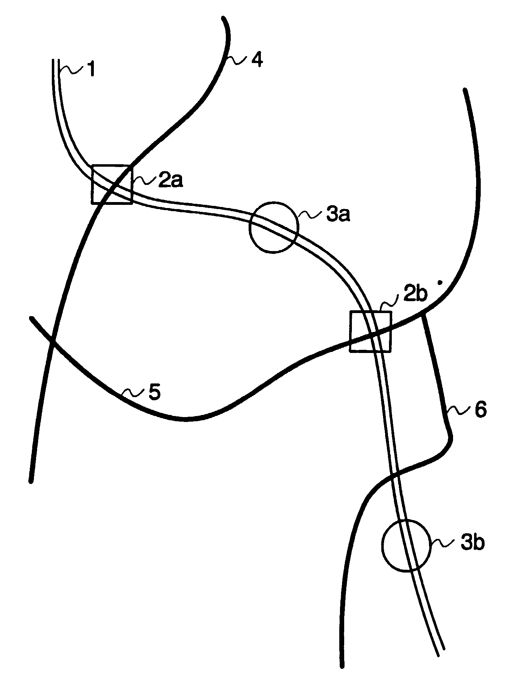

Nachfolgend wird die Erfindung am Beispiel eines Autobahnbenutzungsgebührenabrechnungssystems näher beschrieben. Die einzige Figur zeigt einen Ausschnitt aus einem Straßennetz mit Autobahn.

Das erfindungsgemäße System wird aus drei Funktionshauptblöcken gebildet, nämlich aus:
- einem fahrzeuginternen Positionserfassungssystem,
- einem fahrzeuginternen Abrechnungssystem und
- einem mobilen Speichermedium als Abrechnungsdatenträger.

Das Positionserfassungssystem weist ein System zum Empfang von Informationen zur Erkennung der aktuellen geographischen Position des Fahrzeugs und eine erste Speichereinrichtung zur temporären Speicherung der aktuellen Position auf. Die Informationen zur Positionserkennung werden auf drahtlosem Wege von einem unabhängig vom Autobahnnetz installierten System empfangen. Dieses System ist vielfach ohnehin bereits vorhanden oder kann mit vergleichsweise wenig Aufwand auf die Aufgabe zur Aussendung entsprechender Informationen eingerichtet werden. Beispiele hierfür sind vorhandene Satellitennavigationssysteme (z.B. GPS, (Glonass) oder Funkpeilsysteme auf der Basis vorhandener Funktelefonnetze (z.B. C-, D-, E-Netz), wobei aufgrund unterschiedlicher Signallaufzeiten zu benachbarten Bodenstationen eine sehr genaue Positionsbestimmung erfolgen kann. Bei Satellitennavigationssystemen kann es zur Erhöhung der Genauigkeit der Positionsermittlung zweckmäßig sein, eine Empfangsmöglichkeit für ein Korrektursignal vorzusehen (z.B. für das Differential-GPS-System). Dadurch werden Fehlereinflüsse wie etwa Satellitenbahnfehler, Uhrenfehler und Signalausbreitungsfehler kompensiert und eine Ortsauflösung auf unter 10 m möglich. Ein solches Korrektursignal könnte beispielsweise über den Rundfunk (z.B. RDS) oder über ein GSM-Funktelefonnetz ausgesendet werden. Es sind auch Systeme möglich, die die Fahrzeugposition aus Funkkontakt und aus im Fahrzeug installierter Sensorik ermitteln. Beispielsweise können ein Sensor zur Ermittlung des Fahrweges (z.B. über die Umdrehung der Hinterräder) und eine Magnetfeldsonde vorgesehen sein, die eine genaue Ortsbestimmung anhand eines digitalisierten Straßennetzes ermöglichen, wenn jeweils vor Fahrtbeginn die Fahrzeugposition über eine fahrzeuginterne Kommunikationseinrichtung eingeholt wird. Um bei einem kurzzeitigen Ausfall eines Positionserfassungssystem (z.B. durch Abschirmeffekte oder durch ungünstige Satellitenstellung) eine kontinuierliche Fortschreibung der Positionsdaten zu ermöglichen, kann ein "Dead-Reckoning-Sensor" (z.B. in Form einer Magnetfeldsonde) vorgesehen sein, der vom Fahrzeug mitgeführt wird.

Das fahrzeuginterne Abrechnungssystem beinhaltet zunächst eine zweite Speichereinrichtung zur permanenten Speicherung vorgegebener geographischer Positionen (Identifizierungspunkte), die eine eindeutige Charakterisierung der einzelnen Wegstrecken des Wegstreckennetzes und/oder der festgelegten Zonen erlauben. Weiterhin ist eine Recheneinheit vorhanden, die als Vergleichseinrichtung arbeitet und ständig in kurzen Abständen (z.B. jede Sekunde ein- oder zweimal) die aktuelle Fahrzeugposition mit den gespeicherten Positionsdaten (Koordinaten) der Identifizierungspunkte vergleicht. Wenn sich eine hinreichend genaue Ubereinstimmung der Positionsdaten ergibt, identifiziert die Recheneinrichtung die zu diesem Identifikationspunkt zuordbare Autobahnteilstrecke, die gerade befahren wird. Dies wird weiter unten noch näher erläutert.

Die Benutzung identifizierter Autobahnteilstrecken wird von der Recheneinrichtung auf einem mobilen Speichermedium verbucht. Unter einem solchen mobilen Speichermedium ist eine Einrichtung zu verstehen, die vom Fahrer des Fahrzeugs mitgeführt werden kann und im Benutzungsfall über eine Lese/Schreib-Einrichtung informationstechnisch mit der Recheneinrichtung verbindbar ist. Vorzugsweise ist dieses mobile Speichermedium als Magnetstreifen- oder Chip-Speicherkarte ausgebildet. Aber auch andere Medien sind denkbar, beispielsweise programmierbare Speicherbausteine wie PAL-, FPLA- oder FPLS-Bausteine.

Für den Fall, daß die vom Positionserfassungssystem extern empfangenen Informationen noch keine Positionsdaten im engeren Sinne sind, übernimmt die Recheneinrichtung zusätzlich die Aufgabe, aus diesen Informationen die Koordinaten der jeweiligen Fahrzeugposition zu errechnen. Die zweite Speichereinrichtung mit den Positionsdaten der Identifikationspunkte kann körperlich in die erste Speichereinrichtung integriert sein. Vorteilhaft kann es aber auch sein, die zweite Speichereinrichtung in das mobile Speichermodul zu integrieren.

Das Prinzip der Nutzungsabrechnung kann anhand des in der Figur dargestellten Ausschnitts eines Streckennetzes verdeutlicht werden, das neben einer gebührenpflichtigen Autobahn 1 auch gebührenfreie Straßen 4, 5, 6 aufweist, die die Autobahn 1 kreuzen. Die Ein/Ausfahrten 2a und 2b der Autobahn 1 sind mit Quadraten gekennzeichnet. Die geographischen Positionen dieser gekennzeichneten Stellen sind als Identifikationspunkte in der zweiten Speichereinrichtung gespeichert. Wenn nun von der Recheneinrichtung eine aktuelle Fahrzeugposition erkannt wird, die mit der Position des Quadrats 2a oder 2b (mit vorgegebener Genauigkeit) übereinstimmt, dann kann dies bedeuten, daß sich das Fahrzeug auf einem gebührenpflichtigen Autobahnabschnitt befindet. Es könnte aber auch sein, daß lediglich eine Uberquerung der Autobahn 1 auf der gebührenfreien Straße 4 bzw. 5 stattfindet. Auch das spätere Passieren eines zweiten Quadrats läßt in dieser Hinsicht noch keine eindeutige Aussage zu. So kann man beispielsweise vom Quadrat 2a über die Straßen 4 und 5 auch zu dem Quadrat 2b gelangen, also ebenso wie über die Autobahn 1. Aus diesem Grunde ist vorgesehen, daß zwischen zwei unmittelbar benachbarten Ein/Ausfahrten der Autobahn 1 jeweils mindestens ein weiterer (durch einen Kreis markierter) auf der Autobahn 1 liegender Identifikationspunkt 3a, 3b vorgegeben und gespeichert ist. Dieser weitere Identifikationspunkt ermöglicht, wenn er nach einer identifizierten Ein/Ausfahrtstelle passiert wird, eine völlig eindeutige Aussage darüber, welches Autobahnteilstück gerade benutzt wird, so daß eine entsprechende Verbuchung zur Kostenabrechnung auf dem mobilen Speichermedium erfolgen kann. Um das Autobahnstreckennetz mit allen Streckenabschnitten vollständig zu charakterisieren, sind auch Autobahnkreuze und Autobahndreiecke als Identifikationspunkte mit ihren Positionskoordinaten erfaßt.

Im Prinzip wäre es möglich, die effektive Abrechnung der Nutzungsgebühren beispielsweise monatlich anhand der jeweils aufgezeichneten Benutzungen an Gebühreneinzahlungsstellen vorzunehmen. Wesentlich vorteilhafter ist es jedoch, das mobile Speichermedium ähnlich wie eine Telefonkarte zu handhaben. Das bedeutet, daß eine solche "Autobahngebührenkarte" vom Benutzer gekauft wird und er hierdurch im voraus bereits die Berechtigung zur Autobahnbenutzung in einem festgelegten Umfang (Benutzungsguthaben) erwirbt. Im Falle der tatsächlichen Benutzung der Autobahn wird dann sukzessive die Gebühr für jede befahrene Teilstrecke von dem aktuellen Benutzungsguthaben abgebucht.

Wenn neben den Identifikationspunkten des Autobahnstreckennetzes auch die Nutzungstarife auf dem mobilen Speichermedium abgelegt sind, hat dies den großen Vorteil, daß dann auf einfache Weise gestufte Nutzungsberechtigungen realisiert werden können. Beispielsweise ist es möglich, spezielle Autobahngebührenkarten für die Benutzung bestimmter Regionen oder für bestimmte Streckenverläufe (z.B. Transitautobahnen) auszugeben. Soweit für unterschiedliche Fahrzeugtypen (PKW, Motorrad, Bus, LKW) unterschiedliche Gebührensätze zur Anwendung kommen sollen, kann auch dies problemlos durch entsprechend unterschiedlich gestaltete und mit anderen Tarifen versehene Autobahngebührenkarten berücksichtigt werden.

Die fahrzeuginternen Komponenten der erfindungsgemäßen Einrichtung, die vorzugsweise als kompaktes mobiles Verbuchungsgerät gestaltet sind, können beispielsweise auch körperlich in ein Autoradio, in ein Terminal eines Verkehrsleitsystems oder in ein Mobilfunkgerät integriert sein und somit fest in ein Fahrzeug eingebaut sein. Mobile Geräte bieten sich insbesondere für die Gebührenabrechnung von ausländischen Fahrzeugen an, die keine entsprechenden Einrichtungen aufweisen. An Grenzstationen können dann neben Autobahnbenutzungskarten auch Verbuchungsgeräte leihweise gegen entsprechendes Entgelt ausgegeben werden. Die Funktion des Verbuchungsgerätes wird vorzugsweise dadurch aktiviert, daß die Autobahnbenutzungskarte in eine entsprechende Lese/Schreib-Einrichtung eingeführt wird. Bei Stillstand des Fahrzeugs kann vorgesehen sein, daß das Gerät automatisch abgeschaltet wird, um es bei Fortsetzung der Fahrt automatisch wieder zu aktivieren. Vorteilhaft sind fahrzeuginterne Anzeigeeinrichtungen, die den Fahrer auf das Einfahren in eine gebührenpflichtige Zone aufmerksam machen und darüber hinaus rechtzeitig (ähnlich einer Tankanzeige) deutliche Hinweise auf die bevorstehende Erschöpfung des Benutzungsguthabens geben. Zweckmäßig ist eine laufende Anzeige des aktuellen Benutzungsguthabens. Vorzugsweise sind entlang der Autobahnteilstrecken (z.B. an Raststätten, Tankstellen, Parkplätzen) Stationen vorgesehen, an denen ein Ruffüllen des Benutzungsguthabens gegen entsprechendes Entgelt oder der Kauf einer neuen Autobahnbenutzungskarte erfolgen kann.

Die erfindungsgemäße Einrichtung gestattet im Bedarfsfall eine sehr differenzierte Nutzungsabrechnung, bei der auch die Intensität der Nutzung (z.B. Erfassung der Rufenthaltsdauer in einer gebührenpflichtigen Zone) berücksichtigt werden kann. Zu diesem Zweck können spezielle Eingabemöglichkeiten für entsprechende Parameter vorgesehen sein. Eine sinnvolle Variante wäre beispielsweise, in verkehrsarmen Zeiten (z.B. saisonabhängig oder nachts) niedrigere Tarife für einzelne Teilstrecken oder das gesamte Rutobahnnetz anzuwenden, um durch entsprechende Verkehrsverlagerungen eine Entlastung der stark belasteten Zeiten zu erzielen.

Um eine unberechtigte Benutzung gebührenpflichtiger Streckenabschnitte oder Zonen zu vermeiden und entsprechenden Mißbrauch verfolgbar zu machen, ist eine nach außen wirkende Signaleinrichtung (z.B. HF-Sender, RF-Sender, Laserdiode für Infrarotsignal usw.) zweckmäßig, die bei ordnungsgemäßem Abrechnungsverfahren und folglich rechtmäßiger Straßenbenutzung arbeitet und ein "In-Ordnung"-Signal sendet. Extern angeordnete Empfangsstationen (z.B. in Kontrollfahrzeugen installiert, die an Autobahnausfahrten eingesetzt werden) können dadurch die Fahrzeuge erfassen, die kein Gebührenerfassungssystem mitführen oder die ihr installiertes System nicht ordnungsgemäß betreiben, also die fällige Gebühr nicht entrichten. Alternativ oder ergänzend kann auch eine nach außen wirkende Signaleinrichtung (z.B. eine farbige Kontrolleuchte) verwendet werden, die automatisch aktiviert wird, wenn nach Verbrauch des Benutzungsguthabens die Fahrt innerhalb des gebührenpflichtigen Bereichs fortgesetzt wird. Es kann auch vorgesehen sein, in derartigen Fällen ein Funksignal, das eine Identifizierung des Fahrzeugs ermöglicht, an eine Uberwachungsstation zu senden. Der Umfang der unzulässigen Weiterbenutzung der Autobahn kann auf dem mobilen Speichermodul für Zwecke der lokalen Verkehrskontrolle in solchen Fällen aufgezeichnet werden.

Ein wesentlicher Vorteil der erfindungsgemäßen Lösung ist es, daß sie keine oder zumindest nicht in erheblichem Umfang eine Neueinrichtung von Infrastruktur erfordert, sondern die Nutzung von Einrichtungen ermöglicht, die ohnehin bereits vorhanden, also unabhängig von dem der Nutzungsabrechnung unterliegenden jeweiligen Gebiet installiert sind. Ein weiterer wichtiger Vorteil ist darin zu sehen, daß die Feststellung und Abrechnung gebührenpflichtiger Nutzungen autonom im Fahrzeug selbst stattfindet und somit hinsichtlich des Datenschutzes günstige Bedingungen vorliegen, die eine unerwünschte Uberwachung des Fahrverhaltens ausschließen. Es ist vorgesehen, daß keine Informationen gespeichert bleiben, die eine Identifizierung der vom jeweiligen Fahrzeug zurückgelegten Gesamtstrecke innerhalb des gebührenpflichtigen Bereichs ermöglichen würden. Die zwischengespeicherten Informationen über durchfahrene Teilstrecken werden nach erfolgter Abbuchung der Nutzungsgebühr vom Benutzungsguthaben gelöscht. Neu im Speicher abgelegt werden jeweils die Koordinaten des zuletzt vom Fahrzeug passierten Identifikationspunktes, der den Beginn der aktuell befahrenen Teilstrecke repräsentiert. Wenn es allerdings ausdrücklich gewünscht wird, können bei Bedarf auch spezielle Rbbuchungsgeräte zur Verfügung gestellt werden, die eine lückenlose Protokollierung aller zurückgelegten Wegstrecken vornehmen, um z.B. für Transportunternehmen die automatische Führung eines Fahrtenbuchs zu ermöglichen.

Wie anfangs bereits geschildert, ist der Einsatz der erfindungsgemäßen Einrichtung keineswegs auf den Straßenverkehr beschränkt, sondern ist auf eine Vielzahl anderer Anwendungen übertragbar.

## Patentansprüche (Patentansprüche für folgende(n) Vertragsstaat(en): DE, ES, FR, GB, IT)

1. Nutzungsabrechnungssystem mit einer Einrichtung zur Identifizierung von Wegstrecken, die von einem bewegten Objekt innerhalb eines Wegstreckennetzes zurückgelegt werden, oder von festgelegten geographischen Zonen, die vom Objekt betreten werden, mit folgenden Komponenten:
a) Ein außerhalb des bewegten Objektes und von den zurücklegbaren Wegstrecken und festgelegten geographischen Zonen unabhängig installiertes System zur drahtlosen übermittlung von Informationen zur Erkennung der aktuellen geographischen Position des Objektes;
b) ein vom bewegten Objekt mitgeführtes Empfangssystem für die drahtlos übermittelten Informationen zur Positionserkennung;
c) eine erste vom Objekt mitgeführte Speichereinrichtung zur temporären Speicherung von Daten der aktuellen geographischen Position des Objektes;
d) eine zweite vom Objekt mitgeführte Speichereinrichtung zur permanenten Speicherung vorgegebener geographischer Positionen (Identifizierungspunkte) zur eindeutigen Charakterisierung der einzelnen Wegstrecken des Wegstreckennetzes und/oder der festgelegten geographischen Zonen;
e) eine vom Objekt mitgeführte Vergleichseinrichtung zum Vergleich der in regelmäßigen Abständen ermittelten jeweiligen geographischen Position des Objektes mit den Positionsdaten der Identifikationspunkte;
f) eine vom Objekt mitgeführte Identifikationseinrichtung zur Identifizierung der vom Objekt jeweils zurückgelegten Wegstrecke und/oder der betretenen oder verlassenen festgelegten geographischen Zone anhand der von der Vergleichseinrichtung ermittelten, mit Identifikationspunkten übereinstimmenden geographischen Positionen, die vom Objekt gerade passiert wurden;
g) ein mobiles, mit der Identifikationseinrichtung informationstechnisch verbindbares Speichermodul, in dem die jeweils identifizierte aktuell zurückgelegte Wegstrecke und/oder die Anwesenheit in einer festgelegten geographischen Zone verbucht wird;
h) eine vom Objekt mitgeführte, nach außen wirkende Signaleinrichtung, die nach Verbrauch des Guthabenbetrags im Falle des weiteren Aufenthalts auf einer der Nutzungsabrechnung unterliegenden Wegstrecke oder in einer entsprechenden festgelegten geographischen Zone aktiviert wird.

2. Einrichtung nach Anspruch 1,
dadurch gekennzeichnet,
daß vom Objekt eine Recheneinheit mitgeführt wird, die aus den drahtlos übermittelten Informationen die geographische Position des Objektes jeweils berechnet, wenn die drahtlos übermittelten Informationen selbst noch keine Positionsdaten darstellen.

3. Einrichtung nach einem der Ansprüche 1 bis 2,
dadurch gekennzeichnet,
daß das System zur drahtlosen übermittlung von Informationen über geographische Positionen ein Satelliten-Navigationssystem ist.

4. Einrichtung nach Anspruch 3,
dadurch gekennzeichnet,
daß das mitgeführte Empfangssystem zum Empfang von Korrektursignalen eingerichtet ist, mit denen die Genauigkeit der Positionserkennung verbessert werden kann.

5. Einrichtung nach einem der Ansprüche 3 oder 4,
dadurch gekennzeichnet,
daß vom Objekt ein Dead-Reckoning-Sensor, insbesondere in Form einer Magnetfeldsonde, mitgeführt wird, der bei kurzzeitigem Ausfall des Navigationssystems eine kontinuierliche Fortschreibung der Positionsdaten ermöglicht.

6. Einrichtung nach Anspruch 1,
dadurch gekennzeichnet,
daß das System zur drahtlosen übermittlung von Informationen über geographische Positionen in ein zellular aufgebautes Funktelefonnetz integriert ist, wobei das Empfangssystem im Objekt ein Funktelefon ist und die Positionsbestimmung anhand unterschiedlicher Signallaufzeiten vom Objekt zu einzelnen Empfangsstationen des Funktelefonnetzes durch ein Rechnersystem des Funktelefonnetzes erfolgt und die Ergebnisse als Positionsdaten an das Objekt übermittelt werden und wobei das Funktelefon mit einer Einrichtung zur regelmäßigen Aussendung seiner Kennungsdaten und zum Empfang der Positionsdaten auch außerhalb der eigentlichen Telefonbenutzung versehen ist.

7. Einrichtung nach einem der Ansprüche 1 bis 2,
dadurch gekennzeichnet,
daß das System zur drahtlosen übermittlung von Informationen über geographische Positionen ein Funkpeilsystem ist.

8. Einrichtung nach einem der Ansprüche 1 bis 7,
dadurch gekennzeichnet,
daß das mobile Speichermodul eine Magnetstreifen- oder Chip-Speicherkarte ist.

9. Einrichtung nach einem der Ansprüche 1 bis 8,
dadurch gekennzeichnet,
daß die zweite Speichereinrichtung mit den Positionsdaten der Identifikationspunkte Bestandteil des mobilen Speichermoduls ist.

10. Einrichtung nach einem der Ansprüche 1 bis 9, wobei das bewegte Objekt ein Straßenfahrzeug und das Wegstreckennetz ein Autobahnnetz ist,
dadurch gekennzeichnet,
daß die permanent gespeicherten Daten der Identifikationspunkte sich auf die Anschlußstellen (Ein- und Ausfahrten) der Autobahn und jeweils auf mindestens einen zwischen zwei unmittelbar aufeinanderfolgenden Anschlußstellen liegenden Zwischenpunkt der Autobahnwegstrecke zwischen diesen beiden Anschlußstellen beziehen.

11. Einrichtung nach einem der Ansprüche 1 bis 10,
dadurch gekennzeichnet,
daß das Empfangssystem, die erste Speichereinrichtung, die Vergleichseinrichtung und die Identifikationseinrichtung zu einem Verbuchungsgerät zusammengefaßt sind.

12. Einrichtung nach Anspruch 11,
dadurch gekennzeichnet,
daß das Verbuchungsgerät in seiner Funktion durch das Verbinden des mobilen Speichermoduls aktivierbar ist.

13. Einrichtung nach Anspruch 11 oder 12,
dadurch gekennzeichnet,
daß das Verbuchungsgerät Bestandteil eines Autoradios oder eines fahrzeuginternen Terminals eines Verkehrsleitsystems ist.

14. Einrichtung nach einem der Ansprüche 1 bis 13,
dadurch gekennzeichnet,
daß die Verbuchung einer identifizierten, in einem gebührenpflichtigen Wegstreckennetz aktuell zurückgelegten Wegstrecke und/oder das Betreten einer festgelegten geographischen Zone jeweils in Form einer Abbuchung von einem in dem mobilen Speichermodul gespeicherten Guthabenbetrag (Benutzungsguthaben) durchführbar ist, wobei der Abbuchungsbetrag anhand von Gebühreninformationen über das Wegstreckennetz ermittelbar ist, die entweder in der zweiten Speichereinrichtung oder in dem mobilen Speichermodul permanent gespeichert sind.

15. Einrichtung nach Anspruch 14,
dadurch gekennzeichnet,
daß an ausgewählten Punkten, vorzugsweise an Rast- und Tankstellen von Autobahnen, Stationen zur Auffüllung des gespeicherten Guthabenbetrags vorgesehen sind.

16. Einrichtung nach einem der Ansprüche 14 bis 15,
dadurch gekennzeichnet,
daß eine erste Anzeigeeinrichtung vorgesehen ist, die im Objekt ein Signal ausgibt, das auf die baldige Erschöpfung des Guthabenbetrags aufmerksam macht.

17. Einrichtung nach einem der Ansprüche 11 bis 16,
dadurch gekennzeichnet,
daß das Verbuchungsgerät Eingabemöglichkeiten aufweist für Parameter, die die Zeit und/oder die Intensität der Nutzung des Wegstreckennetzes durch das Objekt kennzeichnen.

18. Einrichtung nach einem der Rnsprüche 1 bis 17,
dadurch gekennzeichnet,
daß im Objekt eine zweite Anzeigeeinrichtung vorgesehen ist, die beim Eintritt in eine der Nutzungsabrechnung unterliegende Wegstrecke oder geographische Zone von der Identifikationseinrichtung aktivierbar ist und einen entsprechenden Hinweis im Objekt signalisiert.

19. Einrichtung nach einem der Ansprüche 14 bis 18,
dadurch gekennzeichnet,
daß die vom Objekt mitgeführte, nach außen wirkende Signaleinrichtung ein "In-Ordnung"-Signal aussendet, solange eine ordnungsgemäße Nutzungsabrechnung stattfindet.

20. Einrichtung nach Anspruch 18 oder 19,
dadurch gekennzeichnet,
daß die nach außen wirkende Signaleinrichtung ein optisches Signal, insbesondere ein Infrarotsignal aussendet.

21. Einrichtung nach Anspruch 18 oder 19,
dadurch gekennzeichnet,
daß die nach außen wirkende Signaleinrichtung ein Funksignal aussendet.

## Patentansprüche (Patentansprüche für folgende(n) Vertragsstaat(en): AT, BE, CH, LI, DK, GR, LU, NL, PT, SE)

1. Nutzungsabrechnungssystem mit einer Einrichtung zur Identifizierung von Wegstrecken, die von einem bewegten Objekt innerhalb eines Wegstreckennetzes zurückgelegt werden, oder von festgelegten geographischen Zonen, die vom Objekt betreten werden, mit folgenden Komponenten:
a) Ein außerhalb des bewegten Objektes und von den zurücklegbaren Wegstrecken und festgelegten geographischen Zonen unabhängig installiertes System zur drahtlosen Ubermittlung von Informationen zur Erkennung der aktuellen geographischen Position des Objektes;
b) ein vom bewegten Objekt mitgeführtes Empfangssystem für die drahtlos übermittelten Informationen zur Positionserkennung;
c) eine erste vom Objekt mitgeführte Speichereinrichtung zur temporären Speicherung von Daten der aktuellen geographischen Position des Objektes;
d) eine zweite vom Objekt mitgeführte Speichereinrichtung zur permanenten Speicherung vorgegebener geographischer Positionen (Identifizierungspunkte) zur eindeutigen Charakterisierung der einzelnen Wegstrecken des Wegstreckennetzes und/oder der festgelegten geographischen Zonen;
e) eine vom Objekt mitgeführte Vergleichseinrichtung zum Vergleich der in regelmäßigen Abständen ermittelten jeweiligen geographischen Position des Objektes mit den Positionsdaten der Identifikationspunkte;
f) eine vom Objekt mitgeführte Identifikationseinrichtung zur Identifizierung der vom Objekt jeweils zurückgelegten Wegstrecke und/oder der betretenen oder verlassenen festgelegten geographischen Zone anhand der von der Vergleichseinrichtung ermittelten, mit Identifikationspunkten übereinstimmenden geographischen Positionen, die vom Objekt gerade passiert wurden;
g) ein mobiles, mit der Identifikationseinrichtung informationstechnisch verbindbares Speichermodul, in dem die jeweils identifizierte aktuell zurückgelegte Wegstrecke und/oder die Anwesenheit in einer festgelegten geographischen Zone verbucht wird.

2. Einrichtung nach Anspruch 1,
dadurch gekennzeichnet,
daß vom Objekt eine Recheneinheit mitgeführt wird, die aus den drahtlos übermittelten Informationen die geographische Position des Objektes jeweils berechnet, wenn die drahtlos übermittelten Informationen selbst noch keine Positionsdaten darstellen.

3. Einrichtung nach einem der Ansprüche 1 bis 2,
dadurch gekennzeichnet,
daß das System zur drahtlosen Ubermittlung von Informationen über geographische Positionen ein Satelliten-Navigationssystem ist.

4. Einrichtung nach Anspruch 3,
dadurch gekennzeichnet,
daß das mitgeführte Empfangssystem zum Empfang von Korrektursignalen eingerichtet ist, mit denen die Genauigkeit der Positionserkennung verbessert werden kann.

5. Einrichtung nach einem der Ansprüche 3 oder 4,
dadurch gekennzeichnet,
daß vom Objekt ein Dead-Reckoning-Sensor, insbesondere in Form einer Magnetfeldsonde, mitgeführt wird, der bei kurzzeitigem Ausfall des Navigationssystems eine kontinuierliche Fortschreibung der Positionsdaten ermöglicht.

6. Einrichtung nach Anspruch 1,
dadurch gekennzeichnet,
daß das System zur drahtlosen Ubermittlung von Informationen über geographische Positionen in ein zellular aufgebautes Funktelefonnetz integriert ist, wobei das Empfangssystem im Objekt ein Funktelefon ist und die Positionsbestimmung anhand unterschiedlicher Signallaufzeiten vom Objekt zu einzelnen Empfangsstationen des Funktelefonnetzes durch ein Rechnersystem des Funktelefonnetzes erfolgt und die Ergebnisse als Positionsdaten an das Objekt übermittelt werden und wobei das Funktelefon mit einer Einrichtung zur regelmäßigen Aussendung seiner Kennungsdaten und zum Empfang der Positionsdaten auch außerhalb der eigentlichen Telefonbenutzung versehen ist.

7. Einrichtung nach einem der Ansprüche 1 bis 2,
dadurch gekennzeichnet,
daß das System zur drahtlosen Ubermittlung von Informationen über geographische Positionen ein Funkpeilsystem ist.

8. Einrichtung nach einem der Ansprüche 1 bis 7,
dadurch gekennzeichnet,
daß das mobile Speichermodul eine Magnetstreifen- oder Chip-Speicherkarte ist.

9. Einrichtung nach einem der Ansprüche 1 bis 8,
dadurch gekennzeichnet,
daß die zweite Speichereinrichtung mit den Positionsdaten der Identifikationspunkte Bestandteil des mobilen Speichermoduls ist.

10. Einrichtung nach einem der Ansprüche 1 bis 9, wobei das bewegte Objekt ein Straßenfahrzeug und das Wegstreckennetz ein Autobahnnetz ist,
dadurch gekennzeichnet,
daß die permanent gespeicherten Daten der Identifikationspunkte sich auf die Anschlußstellen (Ein- und Ausfahrten) der Autobahn und jeweils auf mindestens einen zwischen zwei unmittelbar aufeinanderfolgenden Anschlußstellen liegenden Zwischenpunkt der Autobahnwegstrecke zwischen diesen beiden Anschlußstellen beziehen.

11. Einrichtung nach einem der Ansprüche 1 bis 10,
dadurch gekennzeichnet,
daß das Empfangssystem, die erste Speichereinrichtung, die Vergleichseinrichtung und die Identifikationseinrichtung zu einem Verbuchungsgerät zusammengefaßt sind.

12. Einrichtung nach Anspruch 11,
dadurch gekennzeichnet,
daß das Verbuchungsgerät in seiner Funktion durch das Verbinden des mobilen Speichermoduls aktivierbar ist.

13. Einrichtung nach Anspruch 11 oder 12,
dadurch gekennzeichnet,
daß das Verbuchungsgerät Bestandteil eines Autoradios oder eines fahrzeuginternen Terminals eines Verkehrsleitsystems ist.

14. Einrichtung nach einem der Ansprüche 11 bis 13,
dadurch gekennzeichnet,
daß das Verbuchungsgerät mobil ausgebildet ist.

15. Einrichtung nach einem der Ansprüche 1 bis 14,
dadurch gekennzeichnet,
daß die Verbuchung einer identifizierten, in einem gebührenpflichtigen Wegstreckennetz aktuell zurückgelegten Wegstrecke und/oder das Betreten einer festgelegten geographischen Zone jeweils in Form einer Abbuchung von einem in dem mobilen Speichermodul gespeicherten Guthabenbetrag (Benutrungsguthaben) durchführbar ist, wobei der Abbuchungsbetrag anhand von 6ebühreninformationen über das Wegstreckennetz ermittelbar ist, die entweder in der zweiten Speichereinrichtung oder in dem mobilen Speichermodul permanent gespeichert sind.

16. Einrichtung nach Anspruch 15,
dadurch gekennzeichnet,
daß an ausgewählten Punkten, vorzugsweise an Rast- und Tankstellen von Autobahnen, Stationen zur Auffüllung des gespeicherten Guthabenbetrags vorgesehen sind.

17. Einrichtung nach einem der Ansprüche 15 bis 16,
dadurch gekennzeichnet,
daß eine erste Anzeigeeinrichtung vorgesehen ist, die im Objekt ein Signal ausgibt, das auf die baldige Erschöpfung des Guthabenbetrags aufmerksam macht.

18. Einrichtung nach einem der Ansprüche 11 bis 17,
dadurch gekennzeichnet,
daß das Verbuchungsgerät Eingabemöglichkeiten aufweist für Parameter, die die Zeit und/oder die Intensität der Nutzung des Wegstreckennetzes durch das Objekt kennzeichnen.

19. Einrichtung nach einem der Ansprüche 1 bis 18,
dadurch gekennzeichnet,
daß im Objekt eine zweite Anzeigeeinrichtung vorgesehen ist, die beim Eintritt in eine der Nutzungsabrechnung unterliegende Wegstrecke oder geographische Zone von der Identifikationseinrichtung aktivierbar ist und einen entsprechenden Hinweis im Objekt signalisiert.

20. Einrichtung nach einem der Ansprüche 15 bis 19,
dadurch gekennzeichnet,
daß vom Objekt eine nach außen wirkende Signaleinrichtung mitgeführt wird, die nach Verbrauch des Guthabenbetrags im Falle des weiteren Aufenthalts auf einer der Nutzungsabrechnung unterliegenden Wegstrecke oder in einer entsprechenden festgelegten geographischen Zone aktiviert wird.

21. Einrichtung nach einem der Ansprüche 15 bis 19,
dadurch gekennzeichnet,
daß vom Objekt eine nach außen wirkende Signaleinrichtung mitgeführt wird, die ein "In-Ordnung"-Signal aussendet, solange eine ordnungsgemäße Nutzungsabrechnung stattfindet.

22. Einrichtung nach Anspruch 20 oder 21,
dadurch gekennzeichnet,
daß die nach außen wirkende Signaleinrichtung ein optisches Signal, insbesondere ein Infrarotsignal aussendet.

23. Einrichtung nach Anspruch 20 oder 21,
dadurch gekennzeichnet,
daß die nach außen wirkende Signaleinrichtung ein Funksignal aussendet.

## Claims (Claims for the following Contracting State(s): DE, ES, FR, GB, IT)

1. Utilisation accounting system with a device for identifying routes which are travelled by a moving object within a route network or fixed geographical zones entered by the object, with the following components:
a) A system installed outside of the moving object and independently of the routes which can be travelled and fixed geographical zones for the wireless transmission of information for detecting the actual geographical position of the object;
b) a receiving system carried by the moving object for the wireless-transmitted information for position detection;
c) a first storage device carried by the object for temporarily storing data on the actual geographical position of the object;
d) a second storage device carried by the object for permanently storing predetermined geographical positions (identification points) for clearly characterising the individual routes of the route network and/or the fixed geographical zones;
e) a comparator device carried by the object for comparing the respective geographical position, which is determined at regular intervals, of the object with the position data of the identification points;
f) an identification device carried by the object for identifying the route in each case travelled by the object and/or the fixed geographical zone which has been entered or left on the basis of the geographical positions, determined by the comparator device and corresponding to identification points, through which the object has just passed;
g) a mobile storage module which can be connected for data transfer to the identification device and in which the route actually travelled and identified in each case and/or presence in a fixed geographical zone is/are recorded;
h) a signal device which is carried by the object, operates externally and, after the credit amount has been used up, is activated if the object continues to travel over a route subject to the utilisation accounting system or in a corresponding fixed geographical zone.

2. Device according to claim 1, characterised in that the object carries a calculating unit which calculates from the wireless-transmitted information the geographical position of the object if the wireless-transmitted information itself does not yet represent position data.

3. Device according to one of claims 1 and 2, characterised in that the system for the wireless transmission of information on geographical positions is a satellite navigation system.

4. Device according to claim 3, characterised in that the receiving system which is carried is set up to receive correction signals by means of which the position detection accuracy can be improved.

5. Device according to one of claims 3 and 4, characterised in that a dead reckoning sensor, particularly in the form of a magnetic field probe, which enables the position data to be continuously updated if the navigation system fails for a short time, is carried by the object.

6. Device according to claim 1, characterised in that the system for the wireless transmission of information on geographical positions is integrated into a radiophone network of a cellular structure, wherein the receiving system in the object is a radiophone, the position determination takes place on the basis of different signal delay times from the object to individual receiving stations of the radiophone network via a computer system of the radiophone network, the results are transmitted as position data to the object, and the radiophone is provided with a device for regularly emitting its identification data and for receiving the position data also independently of the actual use of the telephone.

7. Device according to one of claims 1 to 2, characterised in that the system for the wireless transmission of information on geographical positions is a radio direction finding system.

8. Device according to one of claims 1 to 7, characterised in that the mobile storage module is a magnetic stripe or chip storage card.

9. Device according to one of claims 1 to 8, characterised in that the second storage device with the position data of the identification points is a component of the mobile storage module.

10. Device according to one of claims 1 to 9, wherein the moving object is a road vehicle and the route network is a motorway network, characterised in that the permanently stored data of the identification points relate to the motorway junctions (approaches and exits) and in each case to at least one intermediate point, lying between two directly consecutive junctions, of the motorway route between these two junctions.

11. Device according to one of claims 1 to 10, characterised in that the receiving system, the first storage device, the comparator device and the identification device are combined to form a recording unit.

12. Device according to claim 11, characterised in that the recording unit can be functionally activated by connecting the mobile storage module.

13. Device according to claim 11 or 12, characterised in that the recording unit is a component of a car radio or of a terminal, which is inside the vehicle, of a traffic routing system.

14. Device according to one of claims 1 to 13, characterised in that the recording of an identified route actually travelled in a toll route network and/or entry into a fixed geographical zone can in each case be carried out in the form of debiting a credit amount (user credit) stored in the mobile storage module, wherein the amount debited can be determined on the basis of toll information on the route network stored permanently either in the second storage device or in the mobile storage module.

15. Device according to claim 14, characterised in that stations for replenishing the stored credit amount are provided at selected points, preferably at motorway service and filling stations.

16. Device according to one of claims 14 to 15, characterised in that a first display device is provided which emits a signal in the object as a warning that the credit amount will soon be used up.

17. Device according to one of claims 11 to 16, characterised in that the recording unit comprises input facilities for parameters which characterise the time over which and/or the extent to which the object uses the route network.

18. Device according to one of claims 1 to 17, characterised in that the object comprises a second display device which can be activated by the identification device when the object enters a route or geographical zone subject to the utilisation accounting system and emits a corresponding signal in the object.

19. Device according to one of claims 14 to 18, characterised in that the externally operating signal device carried by the object emits an "in order" signal as long as the utilisation accounting is properly carried out.

20. Device according to claim 18 or 19, characterised in that the externally operating signal device emits an optical signal, in particular an infrared signal.

21. Device according to claim 18 or 19, characterised in that the externally operating signal device emits a radio signal.

## Claims (Claims for the following Contracting State(s): AT, BE, CH, LI, DK, GR, LU, NL, PT, SE)

1. Utilisation accounting system with a device for identifying routes which are travelled by a moving object within a route network or fixed geographical zones entered by the object, with the following components:
a) A system installed outside of the moving object and independently of the routes which can be travelled and fixed geographical zones for the wireless transmission of information for detecting the actual geographical position of the object;
b) a receiving system carried by the moving object for the wireless-transmitted information for position detection;
c) a first storage device carried by the object for temporarily storing data on the actual geographical position of the object;
d) a second storage device carried by the object for permanently storing predetermined geographical positions (identification points) for clearly characterising the individual routes of the route network and/or the fixed geographical zones;
e) a comparator device carried by the object for comparing the respective geographical position, which is determined at regular intervals, of the object with the position data of the identification points;
f) an identification device carried by the object for identifying the route in each case travelled by the object and/or the fixed geographical zone which has been entered or left on the basis of the geographical positions, determined by the comparator device and corresponding to identification points, through which the object has just passed;
g) a mobile storage module which can be connected for data transfer to the identification device and in which the route actually travelled and identified in each case and/or presence in a fixed geographical zone is/are recorded;

2. Device according to claim 1, characterised in that the object carries a calculating unit which calculates from the wireless-transmitted information the geographical position of the object if the wireless-transmitted information itself does not yet represent position data.

3. Device according to one of claims 1 and 2, characterised in that the system for the wireless transmission of information on geographical positions is a satellite navigation system.

4. Device according to claim 3, characterised in that the receiving system which is carried is set up to receive correction signals by means of which the position detection accuracy can be improved.

5. Device according to one of claims 3 and 4, characterised in that a dead reckoning sensor, particularly in the form of a magnetic field probe, which enables the position data to be continuously updated if the navigation system fails for a short time, is carried by the object.

6. Device according to claim 1, characterised in that the system for the wireless transmission of information on geographical positions is integrated into a radiophone network of a cellular structure, wherein the receiving system in the object is a radiophone, the position determination takes place on the basis of different signal delay times from the object to individual receiving stations of the radiophone network via a computer system of the radiophone network, the results are transmitted as position data to the object, and the radiophone is provided with a device for regularly emitting its identification data and for receiving the position data also independently of the actual use of the telephone.

7. Device according to one of claims 1 to 2, characterised in that the system for the wireless transmission of information on geographical positions is a radio direction finding system.

8. Device according to one of claims 1 to 7, characterised in that the mobile storage module is a magnetic stripe or chip storage card.

9. Device according to one of claims 1 to 8, characterised in that the second storage device with the position data of the identification points is a component of the mobile storage module.

10. Device according to one of claims 1 to 9, wherein the moving object is a road vehicle and the route network is a motorway network, characterised in that the permanently stored data of the identification points relate to the motorway junctions (approaches and exits) and in each case to at least one intermediate point, lying between two directly consecutive junctions, of the motorway route between these two junctions.

11. Device according to one of claims 1 to 10, characterised in that the receiving system, the first storage device, the comparator device and the identification device are combined to form a recording unit.

12. Device according to claim 11, characterised in that the recording unit can be functionally activated by connecting the mobile storage module.

13. Device according to claim 11 or 12, characterised in that the recording unit is a component of a car radio or of a terminal, which is inside the vehicle, of a traffic routing system.

14. Device according to one of claims 11 to 13, characterised in that the recording unit is mobile.

15. Device according to one of claims 1 to 14, characterised in that the recording of an identified route actually travelled in a toll route network and/or entry into a fixed geographical zone can in each case be carried out in the form of debiting a credit amount (user credit) stored in the mobile storage module, wherein the amount debited can be determined on the basis of toll information on the route network stored permanently either in the second storage device or in the mobile storage module.

16. Device according to claim 15, characterised in that stations for replenishing the stored credit amount are provided at selected points, preferably at motorway service and filling stations.

17. Device according to one of claims 15 to 16, characterised in that a first display device is provided which emits a signal in the object as a warning that the credit amount will soon be used up.

18. Device according to one of claims 11 to 17, characterised in that the recording unit comprises input facilities for parameters which characterise the time over which and/or the extent to which the object uses the route network.

19. Device according to one of claims 1 to 18, characterised in that the object comprises a second display device which can be activated by the identification device when the object enters a route or geographical zone subject to the utilisation accounting system and emits a corresponding signal in the object.

20. Device according to one of claims 15 to 19, characterised in that the object carries an externally operating signal device which, after the credit amount has been used up, is activated if the object continues to travel over a route subject to the utilisation accounting system or in a corresponding fixed geographical zone.

21. Device according to one of claims 15 to 19, characterised in that the object carries an externally operating signal device which emits an "in order" signal as long as the utilisation accounting is properly carried out.

22. Device according to claim 20 or 21, characterised in that the externally operating signal device emits an optical signal, in particular an infrared signal.

23. Device according to claim 20 or 21, characterised in that the externally operating signal device emits a radio signal.

## Revendications (Revendications pour l'(les) Etat(s) contractant(s) suivant(s): DE, ES, FR, GB, IT)

1. Système de décompte d'utilisation comportant un dispositif pour identifier des trajets qui doivent être parcourus par un objet mobile à l'intérieur d'un réseau de trajets, ou des zones géographiques déterminées dans lesquelles est entré l'objet, comportant les éléments suivants :
a) un système installé à l'extérieur de l'objet mobile et indépendamment des trajets parcourus et des zones géographiques fixées, pour la transmission sans fil d'informations pour la reconnaissance de la position géographique actuelle de l'objet ;
b) un système de réception embarqué sur l'objet mobile pour les informations transmises sans fil, pour la reconnaissance de position ;
c) un premier dispositif de stockage embarqué sur l'objet pour le stockage temporaire de données de la position géographique actuelle de l'objet ;
d) un deuxième dispositif de stockage embarqué sur l'objet pour le stockage permanent de positions géographiques prédéfinies (points d'identification) pour la caractérisation univoque des trajets individuels des réseaux de trajets et/ou des zones géographiques fixées ;
e) un dispositif de comparaison embarqué sur l'objet pour comparer la position géographique de l'objet, déterminée à des distances régulières, aux données de position des points d'identification ;
f) un dispositif d'identification embarqué sur l'objet pour identifier le trajet parcouru par l'objet et/ou la zone géographique fixée atteinte ou quittée, à partir des positions géographiques qui sont déterminées par le dispositif de comparaison, qui correspondent à des points d'identification et qui sont passées par l'objet ;
g) un module de stockage mobile et pouvant être relié pour une transmission d'informations au dispositif d'identification, dans lequel module de stockage sont inscrits le trajet parcouru actuellement et identifié et/ou la présence dans une zone géographique fixée ;
h) un dispositif de signal embarqué sur l'objet, agissant vers l'extérieur et activé après la consommation de la valeur de l'avoir dans le cas d'un séjour supplémentaire sur l'un des trajets soumis au décompte d'utilisation ou dans une zone géographique fixée correspondante.

2. Dispositif selon la revendication 1,
caractérisé en ce qu'une unité de calcul est embarquée sur l'objet, unité de calcul qui calcule, à partir des informations transmises sans fil, la position géographique de l'objet lorsque les informations transmises sans fil ne présentent encore aucune donnée de position.

3. Dispositif selon l'une des revendications 1 ou 2,
caractérisé en ce que le système pour la transmission sans fil d'informations sur des positions géographiques est un système de navigation à satellite.

4. Dispositif selon la revendication 3,
caractérisé en ce que le système de réception embarqué est formé pour détecter des signaux de correction, par lesquels la précision de la reconnaissance de position peut être améliorée.

5. Dispositif selon l'une des revendications 3 ou 4,
caractérisé en ce que l'objet embarque un capteur, en particulier sous forme d'une sonde de champ magnétique, qui permet, lors d'une courte panne du système de navigation, une mise à jour continue des données de position.

6. Dispositif selon la revendication 1,
caractérisé en ce que le système pour la transmission sans fil d'informations sur des positions géographiques est intégré dans un réseau téléphonique hertzien réalisé de façon cellulaire, le système de réception sur l'objet étant un téléphone hertzien et la détermination de la position étant réalisée à partir de durées de parcours différentes de signaux de l'objet, vers des postes de réception individuels du réseau téléphonique hertzien, par un système de calcul du réseau téléphonique hertzien, les résultats étant transmis sous forme de données de position à l'objet, et le téléphone hertzien étant muni d'un dispositif pour l'émission régulière de ses données caractéristiques et pour la réception des données de position, également hors de l'utilisation propre du téléphone.

7. Dispositif selon l'une des revendications 1 à 2,
caractérisé en ce que le système pour la transmission sans fil d'informations sur des positions géographiques est un système à radiogoniomètre.

8. Dispositif selon l'une des revendications 1 à 7,
caractérisé en ce que le module de stockage mobile est une carte de stockage à bande magnétique ou à puce.

9. Dispositif selon l'une des revendications 1 à 8,
caractérisé en ce que le deuxième dispositif de stockage avec les données de position des points d'identification fait partie du module de stockage mobile.

10. Dispositif selon l'une des revendications 1 à 9, l'objet mobile étant un véhicule roulant sur la route et le réseau de trajets étant un réseau d'autoroute,
caractérisé en ce que les données des points d'identification, stockées en permanence sont relatives aux zones de raccordement (entrées et sorties) de l'autoroute et à chaque fois à au moins un point intermédiaire situé entre deux zones de raccordement directement successives du trajet de l'autoroute, entre ces deux zones de raccordement.

11. Dispositif selon l'une des revendications 1 à 10,
caractérisé en ce que le système de réception, le premier dispositif de stockage, le dispositif de comparaison et le dispositif d'identification sont réunis en un appareil de comptabilisation.

12. Dispositif selon la revendication 11,
caractérisé en ce que l'appareil de comptabilisation peut être activé, dans sa fonction, par la liaison du module de stockage mobile.

13. Dispositif selon l'une des revendications 11 ou 12,
caractérisé en ce que l'appareil de comptabilisation fait partie d'une autoradio ou d'un terminal interne au véhicule d'un système de guidage de la circulation.

14. Dispositif selon l'une des revendications 1 à 13,
caractérisé en ce que la comptabilisation d'un trajet identifié et parcouru actuellement dans un réseau de trajets à péage et/ou de la présence sur une zone géographique fixée, peut être réalisée sous forme de la réduction d'une valeur d'avoir (avoir d'utilisation) stockée dans le module de stockage mobile, la valeur de réduction pouvant être déterminée à partir d'informations de taxe par l'intermédiaire du réseau de trajets, qui sont stockées de façon permanente soit dans le deuxième dispositif de stockage, soit dans le module de stockage mobile.

15. Dispositif selon la revendication 14,
caractérisé en ce que l'on prévoit à des points sélectionnés, par exemple à des zones de repos et de ravitaillement en essence d'autoroutes, des postes pour augmenter la valeur de l'avoir stockée.

16. Dispositif selon l'une des revendications 14 ou 15,
caractérisé en ce que l'on prévoit un premier dispositif d'indication qui émet un signal dans l'objet prévenant de l'épuisement prochain de la valeur de l'avoir.

17. Dispositif selon l'une des revendications 11 à 16,
caractérisé en ce que l'appareil de comptabilisation présente des possibilités d'entrée pour des paramètres qui caractérisent la durée et/ou l'intensité de l'utilisation du réseau de trajets par l'objet.

18. Dispositif selon l'une des revendications 1 à 17,
caractérisé en ce que l'on prévoit dans l'objet un deuxième dispositif d'indication qui peut être activé par le dispositif d'identification lors de l'entrée dans un trajet ou une zone géographique, soumise à un décompte d'utilisation, et qui signale une indication correspondante dans l'objet.

19. Dispositif selon l'une des revendications 14 à 18,
caractérisé en ce que le dispositif de signal embarqué sur l'objet et agissant vers l'extérieur émet un signal "en règle", tant qu'un décompte d'utilisation en règle est réalisé.

20. Dispositif selon l'une des revendications 18 ou 19,
caractérisé en ce que le dispositif de signal agissant vers l'extérieur émet un signal optique, en particulier un signal infrarouge.

21. Dispositif selon l'une des revendications 18 ou 19,
caractérisé en ce que le dispositif de signal agissant vers l'extérieur émet un signal hertzien.

## Revendications (Revendications pour l'(les) Etat(s) contractant(s) suivant(s): AT, BE, CH, LI, DK, GR, LU, NL, PT, SE)

1. Système de décompte d'utilisation comportant un dispositif pour identifier des trajets qui doivent être parcourus par un objet mobile à l'intérieur d'un réseau de trajets, ou des zones géographiques déterminées dans lesquelles est entré l'objet, comportant les éléments suivants :
a) un système installé à l'extérieur de l'objet mobile et indépendamment des trajets parcourus et des zones géographiques fixées, pour la transmission sans fil d'informations pour la reconnaissance de la position géographique actuelle de l'objet ;
b) un système de réception embarqué sur l'objet mobile pour les informations transmises sans fil, pour la reconnaissance de position ;
c) un premier dispositif de stockage embarqué sur l'objet pour le stockage temporaire de données de la position géographique actuelle de l'objet ;
d) un deuxième dispositif de stockage embarqué sur l'objet pour le stockage permanent de positions géographiques prédéfinies (points d'identification) pour la caractérisation univoque des trajets individuels des réseaux de trajets et/ou des zones géographiques fixées ;
e) un dispositif de comparaison embarqué sur l'objet pour comparer la position géographique de l'objet, déterminée à des distances régulières, aux données de position des points d'identification ;
f) un dispositif d'identification embarqué sur l'objet pour identifier le trajet parcouru par l'objet et/ou la zone géographique fixée atteinte ou quittée, à partir des positions géographiques qui sont déterminées par le dispositif de comparaison, qui correspondent à des points d'identification et qui sont passées par l'objet ;
g) un module de stockage mobile et pouvant être relié pour une transmission d'informations au dispositif d'identification, dans lequel module de stockage sont inscrits le trajet parcouru actuellement et identifié et/ou la présence dans une zone géographique fixée.

2. Dispositif selon la revendication 1,
caractérisé en ce qu'une unité de calcul est embarquée sur l'objet, unité de calcul qui calcule, à partir des informations transmises sans fil, la position géographique de l'objet lorsque les informations transmises sans fil ne présentent encore aucune donnée de position.

3. Dispositif selon l'une des revendications 1 ou 2,
caractérisé en ce que le système pour la transmission sans fil d'informations sur des positions géographiques est un système de navigation à satellite.

4. Dispositif selon la revendication 3,
caractérisé en ce que le système de réception embarqué est formé pour détecter des signaux de correction, par lesquels la précision de la reconnaissance de position peut être améliorée.

5. Dispositif selon l'une des revendications 3 ou 4,
caractérisé en ce que l'objet embarque un capteur, en particulier sous forme d'une sonde de champ magnétique, qui permet, lors d'une courte panne du système de navigation, une mise à jour continue des données de position.

6. Dispositif selon la revendication 1,
caractérisé en ce que le système pour la transmission sans fil d'informations sur des positions géographiques est intégré dans un réseau téléphonique hertzien réalisé de façon cellulaire, le système de réception sur l'objet étant un téléphone hertzien et la détermination de la position étant réalisée à partir de durées de parcours différentes de signaux de l'objet, vers des postes de réception individuels du réseau téléphonique hertzien, par un système de calcul du réseau téléphonique hertzien, les résultats étant transmis sous forme de données de position à l'objet, et le téléphone hertzien étant muni d'un dispositif pour l'émission régulière de ses données caractéristiques et pour la réception des données de position, également hors de l'utilisation propre du téléphone.

7. Dispositif selon l'une des revendications 1 à 2,
caractérisé en ce que le système pour la transmission sans fil d'informations sur des positions géographiques est un système à radiogoniomètre.

8. Dispositif selon l'une des revendications 1 à 7,
caractérisé en ce que le module de stockage mobile est une carte de stockage à bande magnétique ou à puce.

9. Dispositif selon l'une des revendications 1 à 8,
caractérisé en ce que le deuxième dispositif de stockage avec les données de position des points d'identification fait partie du module de stockage mobile.

10. Dispositif selon l'une des revendications 1 à 9, l'objet mobile étant un véhicule roulant sur la route et le réseau de trajets étant un réseau d'autoroute,
caractérisé en ce que les données des points d'identification, stockées en permanence sont relatives aux zones de raccordement (entrées et sorties) de l'autoroute et à chaque fois à au moins un point intermédiaire situé entre deux zones de raccordement directement successives du trajet de l'autoroute, entre ces deux zones de raccordement.

11. Dispositif selon l'une des revendications 1 à 10,
caractérisé en ce que le système de réception, le premier dispositif de stockage, le dispositif de comparaison et le dispositif d'identification sont réunis en un appareil de comptabilisation.

12. Dispositif selon la revendication 11,
caractérisé en ce que l'appareil de comptabilisation peut être activé, dans sa fonction, par la liaison du module de stockage mobile.

13. Dispositif selon l'une des revendications 11 ou 12,
caractérisé en ce que l'appareil de comptabilisation fait partie d'une autoradio ou d'un terminal interne au véhicule d'un système de guidage de la circulation.

14. Dispositif selon l'une des revendications 11 à 13,
caractérisé en ce que l'appareil de comptabilisation est réalisé de façon mobile.

15. Dispositif selon l'une des revendications 1 à 14,
caractérisé en ce que la comptabilisation d'un trajet identifié et parcouru actuellement dans un réseau de trajets à péage et/ou de la présence sur une zone géographique fixée, peut être réalisée sous forme de la réduction d'une valeur d'avoir (avoir d'utilisation) stockée dans le module de stockage mobile, la valeur de réduction pouvant être déterminée à partir d'informations de taxe par l'intermédiaire du réseau de trajets, qui sont stockées de façon permanente soit dans le deuxième dispositif de stockage, soit dans le module de stockage mobile.

16. Dispositif selon la revendication 15,
caractérisé en ce que l'on prévoit à des points sélectionnés, par exemple à des zones de repos et de ravitaillement en essence d'autoroutes, des postes pour augmenter la valeur de l'avoir stockée.

17. Dispositif selon l'une des revendications 15 ou 16,
caractérisé en ce que l'on prévoit un premier dispositif d'indication qui émet un signal dans l'objet prévenant de l'épuisement prochain de la valeur de l'avoir.

18. Dispositif selon l'une des revendications 11 à 17,
caractérisé en ce que l'appareil de comptabilisation présente des possibilités d'entrée pour des paramètres qui caractérisent la durée et/ou l'intensité de l'utilisation du réseau de trajets par l'objet.

19. Dispositif selon l'une des revendications 1 à 18,
caractérisé en ce que l'on prévoit dans l'objet un deuxième dispositif d'indication qui peut être activé par le dispositif d'identification lors de l'entrée dans un trajet ou une zone géographique, soumise à un décompte d'utilisation, et qui signale une indication correspondante dans l'objet.

20. Dispositif selon l'une des revendications 15 à 19,
caractérisé en ce que l'objet comporte un dispositif de signal agissant vers l'extérieur et activé après la consommation de la valeur de l'avoir, dans le cas d'un séjour supplémentaire sur l'un des trajets soumis au décompte d'utilisation ou dans une zone géographique fixée correspondante.

21. Dispositif selon l'une des revendications 15 à 19,
caractérisé en ce que le dispositif de signal embarqué sur l'objet et agissant vers l'extérieur émet un signal "en règle", tant qu'un décompte d'utilisation en règle est réalisé.

22. Dispositif selon l'une des revendications 20 ou 21,
caractérisé en ce que le dispositif de signal agissant vers l'extérieur émet un signal optique, en particulier un signal infrarouge.

23. Dispositif selon l'une des revendications 20 ou 21,
caractérisé en ce que le dispositif de signal agissant vers l'extérieur émet un signal hertzien.
